# EUROPEAN PATENT SPECIFICATION

(11) **EP 4 585 828 B1**
(45) Date of publication and mention of the grant of the patent: **26.08.2026**
(21) Application number: 25151241.4
(22) Date of filing: 10.01.2025
(51) Int. Cl.: F16H 3/00, F16H 37/04

(54) **IMPROVED TRANSMISSION ARCHITECTURE FOR AGRICULTURAL VEHICLES**
VERBESSERTE GETRIEBEARCHITEKTUR FÜR LANDWIRTSCHAFTLICHE FAHRZEUGE
ARCHITECTURE DE TRANSMISSION AMÉLIORÉE POUR VÉHICULES AGRICOLES

(30) Priority: 12.01.2024 IT 202400000495
(43) Date of publication of application: 16.07.2025
(73) Proprietor: CNH Industrial Italia S.p.A., 10156 Torino (IT)
(72) Inventor: Berselli, Alberto, 10156 Turin (IT); Marzani, Micael, 10156 Turin (IT)
(74) Representative: CNH Industrial IP Department

(56) References cited:
- US-A- 6 044 720

## Description

### TECHNICAL FIELD

The present invention relates to a transmission architecture, in particular a transmission architecture for an off-road vehicle such as an agricultural vehicle and to a related method for controlling the gear shifting of such transmission.

### BACKGROUND OF THE INVENTION

Transmissions for off-road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, i.e. by swapping the torque by a couple of clutches, and in which other gears are actuated by lever mechanisms which commands clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency as consequence.

US6044720A discloses a drive transmission assembly for transmitting vehicle-driving power in a working vehicle such as a tractor.

For this reason, in the art, the dual-clutch transmission, DCT, architecture is considered the most valuable layout for powershift transmissions in order to satisfy all the previous demands:
- it provides a high number of speed ratios with a mechanism that allow for a comfortable powershift (by swapping one couple of clutches); and
- it performs high efficiency, because a powershift layout is provided by only few couples of wet clutches accompanied by many synchronizers and dog-clutches.

Because of these advantages, recently DCT architecture has been applied in the field of the transmissions for agricultural vehicles.

However new requirements request higher speeds of the agricultural vehicles in a wide torque range. This lead to high encumbrance and high weight transmission.

Therefore, the need is felt to solve the aforementioned drawbacks in order to maintain a wide range of transmittable torque, at high speeds while reducing encumbrances of the transmission, its manufacturing time and therefore its costs.

Aim of the present invention is to satisfy the above-mentioned needs in a cost-effective and optimized way.

### SUMMARY OF THE INVENTION

The aforementioned aim is reached by an architecture for a transmission according to claim 1 of the appended set of claims.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a transmission architecture according to the present invention;
- Figures 2 and 3 are schematic representations of the transmission architecture of figure 1 showing concerned power flows in two different exemplarily operative conditions; and
- Figure 4 is a table indicating the activation of elements of the transmission architecture according to the invention.

### DETAILED DESCRIPTION OF THE INVENTION

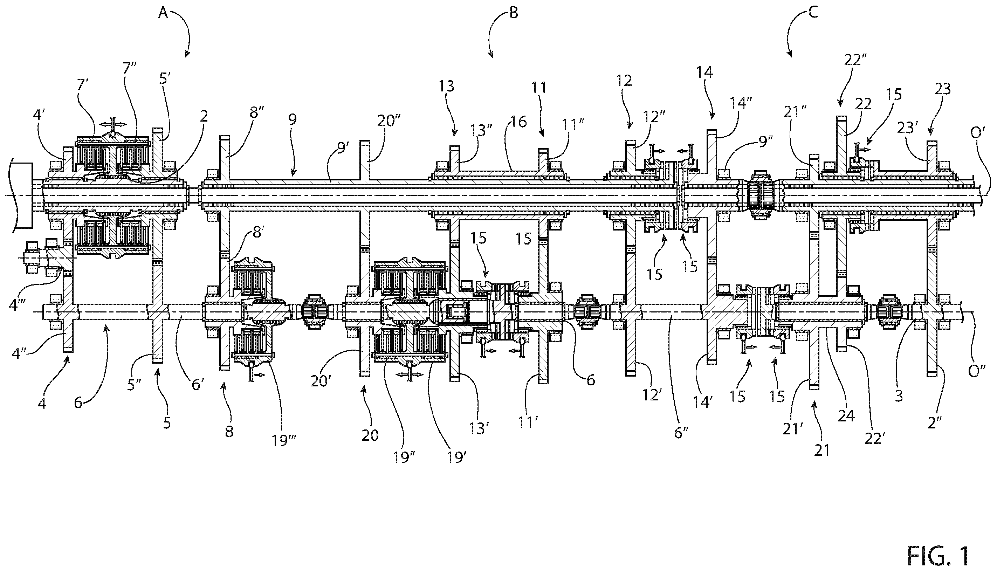

Figure 1 discloses a transmission architecture 1 for an off-road vehicle according to the invention, such as an agricultural vehicle, e.g. a tractor (not illustrated), comprising an engine input shaft 2, operatively connected to a torque source, such as an internal combustion engine of the work vehicle, and an output shaft 3, which can be coupled to a drive axle of the off-road vehicle.

In detail, the input shaft 2 is coaxial to a first axis O', while the output shaft 3 is coaxial to a second axis O'' parallel to the first axis O'.

The transmission 1 essentially comprises, operatively connected in series one to the other between input shaft 2 and output shaft 3, an input stage A, a gear ratio stage B, and a range gear ratio stage C.

The input stage A may be realized in different manner in order to vary rotational direction of input shaft 2 towards gear ratio B, i.e. between a forward motion and a rearward motion.

According to the invention, the input stage A comprises a first and a second gearings 4, 5 selectively connectable to a first support shaft 6 assembly. The first support shaft 6 assembly provides input torque to the gear ratio stage B and is preferably divided into two portions, namely a first portion 6' and a second portion 6'' that are coaxially and rotatably independent one with respect to the other.

The first gearing 4 comprises a first wheel 4' rotatably carried by input shaft 2 ,a second wheel 4'' carried in a fixed manner by the first support shaft 6 and a third wheel 4‴ operatively connecting the first and the second wheels 4', 4'' while the second gearing comprises a first wheel 5' rotatably carried by input shaft 2 and a second wheel 5'' carried in a fixed manner by the first support shaft 6.

The first wheels 4', 5' of gearings 4, 5 are selectively fixed to the input shaft 2 via respective first and second clutch means 7', 7'', namely a rearward clutch 7' and a first forward clutch 7".

In detail, the first and second 4, 5have different gear ratios. The second support shaft 9 assembly similarly to the first one, is divided into two portions, namely a first portion 9' and a second portion 9'', that are coaxially and rotatably independent one with respect to the other.

The gear ratio stage B comprises a plurality of gearings 11, 12, 13, 14 operatively interposed between the first and second support shafts 6, 9 and having a different size one with respect to the other to define respective gear ratios between the input shaft 2 and the output shaft 3.

In particular, the gear ratio stage B defines a first, a second, a third and a fourth gear ratios between the input and the output shafts 2, 3.

Accordingly, the first support shaft 6 carries four gears 11', 12', 13', 14' and the second support shaft 9 carries respective further four counter gears 11'', 12'', 13'', 14'' meshing with the four gears 11', 12', 13', 14' to define the aforementioned gearings 11, 12, 13, 14.

In particular, the first gear 11' has the biggest diameter, the fourth gear has the smallest diameter and the second and third gears 12', 13' have respective diameters comprised between the ones of first and the fourth gears 11', 14'. The respective counter gears 11'', 12'', 13'', 14'' have a diameter corresponding the four gears 11', 12', 13', 14'.

According to the invention, the gears 11', 12', 13', 14' are in part fixedly carried by the second portion 6'' and in part rotatably carried by this latter and selectively fixable thereon via selection means 15. The counter gears 11'', 12'', 13'', 14'' are instead freely carried on the second support shaft 9 via support shafts as disclosed in the following.

In detail, according to the invention:
- The gear 11' of the first gearing 11 is rotatably free carried by the second portion 6'' of the first support shaft 6 and selectively connectable to this latter via selection means 15;
- The gear 13' of the third gearing 13 is rotatably free carried by at least one between the first and second portions 6', 6" of the first support shaft 3 and selectively connectable to the second portion 6'' via selection means 15;
- The gears 12', 14' of the second and fourth gearings 12, 14 are fixedly carried by the second portion 6'' of the first support shaft 6.

On the other side:
- The counter gears 11'' and 13" of the first and second gearings 11, 13 are rotatably free carried over and the first portion 9' of the second support shaft 9 and preferably commonly carried by a common support shaft 19 that is rotatably carried over the aforementioned first portion 9';
- The counter gear 12'' of the second gearing 12 is rotatably free carried by the first portion 9' of the second support shaft 9 and selectively fixed to this latter via selection means 15;
- The counter gear 14'' of the fourth gearing 14 is fixedly carried by the second portion 9'' of the second support shaft 9, and selectively fixed to this latter via selection means 15.

According to the invention, the first portion 9' of second support shaft 9 is connected to the first portion 6' of the first support shaft 6 via jump gearing 20 comprising a wheel 20' and a counter wheel 20''; the wheel 20' is rotatably free carried by the first portion 6' of the first support shaft 6 and the counter wheel 20'' is rigidly carried by the first portion 9' of second support shaft 9.

Advantageously, the gear ratio stage B comprises a third, fourth and a fifth clutch means 19', 19'', 19‴ configured to selectively fix the third wheel 13' of the third gearing 13 and the wheel 20' of the jump gearing 20 to the first portion 6' of the first support shaft.

Preferably the third and fourth clutch means 19', 19'' are carried by the first support shaft 6, in particular by the first portion 6' thereof, and are axially faced one with respect to the other along the longitudinal axis thereof.

The gear ratio stage B further comprises an additional gearing 8 comprising a first wheel 8' rotatably carried by first support shaft 6' and a second wheel 8'' carried in a fixed manner by a second support shaft 9 assembly. The fifth clutch means 19‴ are configured to selectively fix to the first wheel 8' to the first support shaft 6'.

Further preferably the fifth clutch means 19‴ re coaxial to the third and fourth clutch means 19', 19''.

In further detail, the jump gearing 20 is axially interposed between the fifth clutch means 19‴ and the third and fourth clutch means 19', 19''.

The range gear stage C adds a plurality of additional gear ratio that are combined with the gear ratios defined by the gear ratio stage. In the disclosed embodiment, three range gear ratio are provided.

In the disclosed embodiment, the range gear ratio stage C then comprises a first and a range gearings 21, 23 each comprising a first wheel 21', 23', and a second wheel 21'', 23''. In particular, first range gearing 21 is the so-called medium range, the second range gearing 23 is the so-called low range and the fast range is achieved as described below.

The first and second range gearings 21, 23 both comprises a first wheel 21', 23' and a second wheel 21', 23''. The first wheel 21' of the first range gear 21 is rotatably free carried by the output shaft 3 in particular fixedly carried by an auxiliary shaft 24 rotatably free carried on the output shaft 3 while the first wheel 23' of the second range gearing 23 is rotatably free carried by t the second portion 9'' of the second support shaft 9. The second wheels 21'' and 23'' are instead fixedly carried by respectively the second portion 9'' of the second support shaft and by output shaft 3.

The range gear stage further comprises a gearing 22 provided with a first wheel 22' that is rigidly carried by the auxiliary shaft 24 and a second wheel 22'' that is rotatably free carried over the second portion 9 of the second support shaft 9.

In detail, the auxiliary shaft 24 can be coupled to the output shaft via selection means 15 and similarly selection means 15 can connect together the second wheel 22'' of the gearing 22 to the first wheel 23' of the first gearing 23.

The range gear stage C further comprise selection means 15 configured to connect together the output shaft 3 directly to the second portion 6'' of the first support shaft 6 thereby realizing a fast range ratio.

The aforementioned selection means 15 can be realized in different manners such as synchronizer or dog clutches.

The above-described clutches 7', 7'', , 19', 19'', 19‴ and selection means 15 can be selected by respective actuators (not shown) that are controlled by an electronic control unit (not shown). The electronic control unit controls said clutches or said control means by sending control electric signals directed to the respective clutches or selection means to be controlled.

The electronic control unit can be either the ECU of the vehicle or driveline ECU of the vehicle. The electronic control unit is configured to control the above cited elements of the transmission 1 as per direct input command of the user of the vehicle or in automatic way following the shift control logic deployed into a specific software code, which can be memorized into the electronic unit.

The vehicle may be provided by a dedicated control software code in the ECU of the transmission configured to recognize signals from sensors installed on the vehicle, e.g. the torque demand at the output shaft 3 and the speed of the engine input shaft 2, and automatically define the gearshift without any user intervention.

The transmission architecture may further comprise a power take off shaft that is coaxial to axis O' and all the shafts, such as engine shaft 2, coaxial to such first axis O' are rotatably carried over this latter.

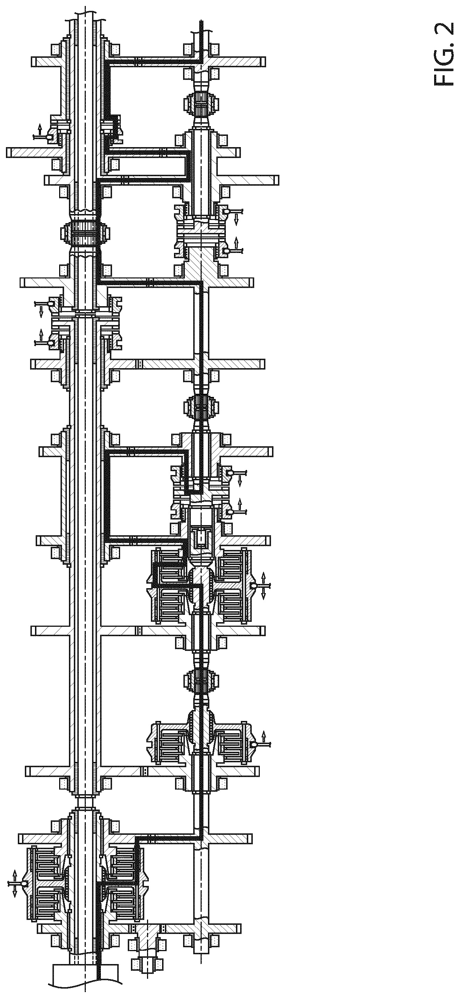

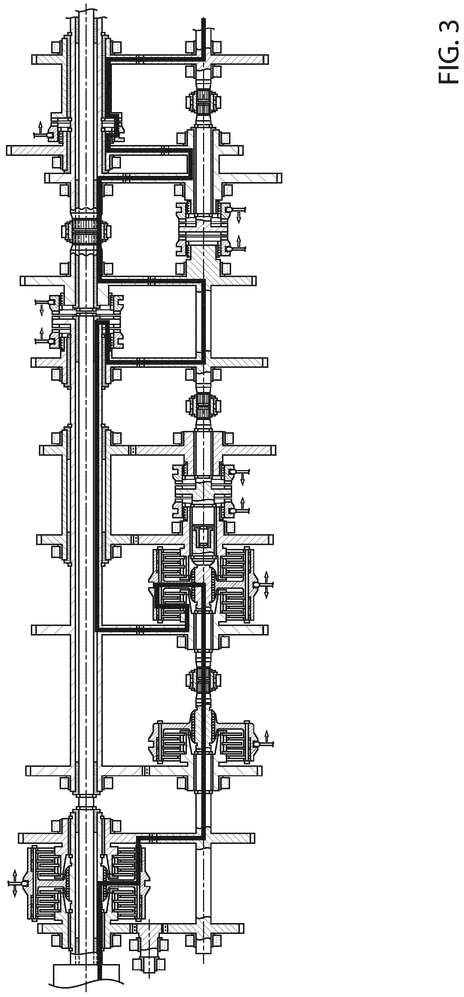

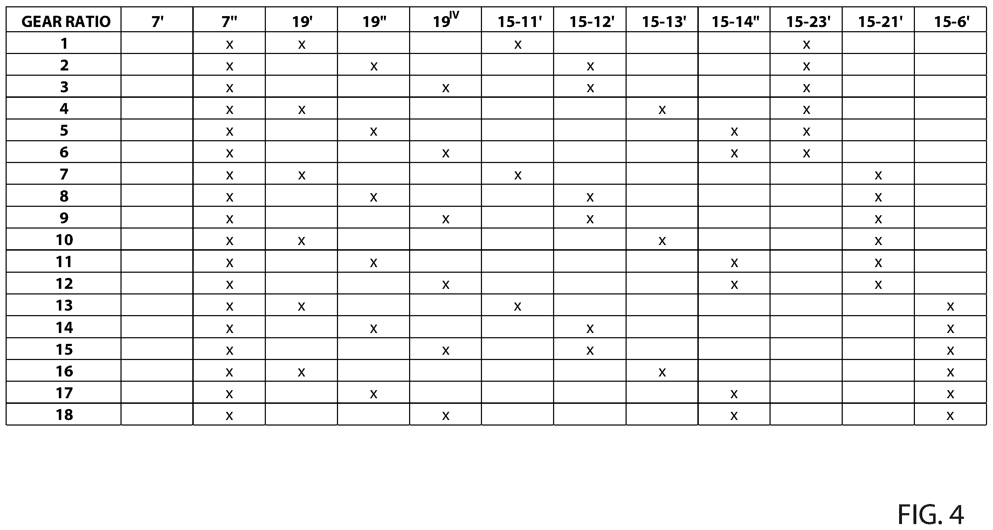

The operation of the transmission 1 according to the invention are described in the following making reference to figures 2, 3 and to table of figure 4.

The vehicle is driving, e.g. forward, in first-low gear ratio, i.e. in the configuration shown in figure 2.

In such configuration, the first forward clutch 7'' couples the second gearing 5 wheels so that torque flows towards the first portion 6' of first support shaft 6, fourth clutch means 19'' couples the gear 13' of the third gearing 13 and selection means 15 couples the gear 11' of the first gearing 11 so that torque passes through the common support shaft 16 to the second portion 6'' of the first support shaft 6. Then, since the selection means 15 coupled the counter wheel 14'' to the second portion 9'' of second support shaft 9 and since the counter wheel 22'' of the second range gearing 22 is coupled to gearing 23 to output shaft 3, the torque flows via gearings 21, 22 towards the output shaft 3.

Supposing to pass to in second-low gear ratio, i.e. in the configuration shown in figure 3, it is sufficient to swap third and fourth clutches 19', 19''.

In such configuration, the first forward clutch 7'' couples the second gearing 5 wheels so that torque flows towards the first portion 6' of first support shaft 6, thirdclutch means 19' couples the gear 20' of the jump gearing 20 and torque passes through the first portion 9' of the second support shaft 9 to the counter wheel 12'' of the second gearing that is coupled to this latter via selection means 15 to the second support shaft 9. Then since the counter wheel 22'' of the second range gearing 22 is coupled to gearing 23 to output shaft, the torque flows via gearings 21, 22 towards the output shaft 3.

The remaining gear ratios and derivable pre-selection of gears and swap of clutches are disclosed in the summarizing table of figure 4 and are not further reported for sake of brevity.

Due to the proposed position of first and second forward clutches, the transmission is provided with overall eighteen gear ratios, as listed (in forward motion) and the same ratios in rearward motion.

A unclaimed embodiment relates to a method for operating a transmission 1 as described above for shifting from a gear ratio of the gear ratio stage B to a requested gear ratio of the gear ratio stage B and comprising the following steps:
- i) receiving an input for shifting from a gear ratio of gear ratio stage B to a requested gear ratio of the gear ratio stage B;
- ii) if the requested gear ratio foresees the use of the same initial gear of the gear ratio stage B, then proceed to step v) otherwise proceed with steps iii) and iv);
- iii) engage by selection means 15 a further gear involved in the requested gear ratio to the second range gear shaft;
- iv) swap clutches 7', 7'', 19', 19'', 19‴ involved in the torque transmission to pass from the initial gear to the further gear;
- v) swap clutches 7', 7'', 19', 19'', 19‴ involved in the torque transmission to pass to the requested gear ratio.

In view of the foregoing, the advantages of a transmission architecture 1 according to the invention and the related method are apparent.

The proposed transmission architecture allows to reduce the number of shafts and in particular of countershafts that are present in the known DCT arrangement thereby providing a high number of gear ratio and reducing weight, encumbrance and costs for producing the transmission.

Indeed, with only a further forward clutch and with the arrangement of the even/odd clutches in an axial alignment, it is possible to avoid the use of countershaft and manages the torque into twenty-four gear ratios in a very compact manner.

Moreover, since shafts and gears are reduced, the overall number of components is reduced and then the manufacturing costs are contained.

Clearly, the inertia of the transmission architecture is further reduces since the torque transmission paths are shorter then the ones of known DCT arrangements.

It is clear that modifications can be applied to the described transmission 1 which do not extend beyond the scope of protection defined by the claims.

For example, the number and typology of gears of gear ratio, range and idler gears may be varied according to vehicle necessity.

Further, the transmission may comprise different elements with respect to the described one, e.g. the number and/or typologies of clutches, gears and dog clutches may be varied.

Moreover, the control and typology of selection means 15 may be implemented with any typology of control, e.g. a hydraulic, electric or pneumatic in alternative or in combinations.

## Claims

1. An architecture for a dual clutch transmission (1) for a work vehicle, said dual clutch transmission (1) comprising:
• an input shaft (2) configured to be coupled to a power source (E) of said work vehicle,
• an output shaft (3) configured to be connected to a driving axle of said work vehicle,
• an input stage (A), a gear ratio stage (B) and a range gear ratio stage (C) operatively connected one to the other with respect to said input shaft (2) and said output shaft (3),
wherein said input stage (A) comprises a first support shaft (6) comprising a first portion (6') and a second portion (6'') coaxially and rotatably independent one with respect to the other and a second support shaft (9) comprising a first portion (9') and a second portion (9'') coaxially and rotatably independent one with respect to the other,
a first and a second gearings (4, 5) operatively interposed between the input shaft (2) and said first portion (6'), a first and a second clutches (7', 7'') configured to select one between said first and second gearings (4, 5) between said input shaft (2) and said first portion (6'),
said gear ratio stage (B) comprise a plurality of gearings (11, 12, 13, 14) operatively interposed between said second portion (6'') and the input shaft (2) and operatively connected to said output shaft (3) to define different gear ratios between said input shaft (2) and said output shaft (3),
said gearings (11, 12, 13, 14) comprising a plurality of gears (11', 12', 13', 14') carried by first support shaft (6) and respective counter gears (11'', 12'', 13'', 14'') configured to mesh with said gears (11', 12', 13', 14') to define different ratios, said gears (11', 12', 13', 14') being in part fixedly carried by said second portion (6) of said first support shaft (6) and in part rotatably carried said second portion (6) and selectively fixable to this latter via selection means (15),
said first portion (9') of said second support shaft (9) assembly being operatively connected via a jump gearing (20) to said first portion (6') of said first support shaft (6), said jump gearing (20) comprising a first wheel (20') rotatably free carried by said first portion (6') and selectively connectable to this latter via third clutch means (19"),
one gear (13') among said gears (11'', 12'', 13'', 14") being selectively connectable to said first portion (6') via fourth clutch means (19'),
said gear ratio stage (B) further comprising a additional gearing (8) operatively interposed between the input shaft (2) and said first portion (6') and fifth clutch means (19‴) configured to select such additional gearing (8); wherein
• the gear (11') of the first gearing (11) is rotatably free carried by the second portion (6'') of said first support shaft (6) and selectively connectable to this latter via selection means (15);
• the gear (13') of the third gearing (13) is rotatably free carried by at least one between the first and second portions (6', 6'') of said first support shaft (6) and selectively connectable to the second portion (6'') via selection means (15);
wherein said jump gearing (20) comprises a second wheel (20") fixedly carried by said first portion (9') of said second support shaft (9);
said architecture is **characterized in that** said counter gears (11'', 12'', 13'', 14'') being rotatably carried by said second support shaft (9), wherein
• the gears (12', 14') of the second and fourth gearings (12, 14) are fixedly carried by the second portion (6'') of said first support shaft (6);
• the counter gears (11'', 13'') of the first and second gearings (11, 13) are rotatably free carried over said first portion (9') of said second support shaft (9) and commonly carried by a common support shaft (16) that is rotatably carried over said first portion (9') ;
• the counter gear (12'') of the second gearing (12) is rotatably free carried by the said first portion (9') of said second support shaft (9) and selectively fixed to this latter via selection means (15) ;
• the counter gear (14") of the fourth gearing (14) is fixedly carried by said second portion (9'') of said second support shaft (9), said second portion (9'') being selectively fixed to said first portion (9') of said second support shaft (9) via selection means (15).

2. Architecture according to claim 1, wherein said third, fourth and fifth clutch means (19', 19'', 19‴) are coaxial to said input shaft (2).

3. Architecture according to claim 1 or 2, wherein said third, fourth and fifth clutch means ( 19', 19'', 19‴) are coaxial to said first support shaft (6).

4. Architecture according to any of claims 1 to 3, wherein said jump gearing (20) is axially interposed between said third, fourth and fifth clutch means (19', 19'', 19‴).

5. Architecture according to any of the preceding claims, wherein said first and second gearings (4, 5) of said input stage (A) each comprises at least a first wheel (4', 5') rotatably carried by said input shaft (2) and selectively fixed to this latter via a respective clutch means (7', 7") and a second wheel (4", 5") meshing with the first wheel (4' , 5') to define different gear ratios, said second wheels (4", 5'') are fixedly carried by said first portion (6') of said first support shaft assembly (6).

6. Architecture according to any of the preceding claims, wherein said additional gearing (8) comprises at least a first wheel (8') rotatably carried by said first portion (6') of said first support shaft (6) assembly and selectively fixed to this latter via a said fifth clutch means (19‴) and a second wheel (8'') fixedly carried by said first portion (9') of said second support shaft (9) assembly.

7. Architecture according to any of claims 5 or 6, wherein said range gear stage (C) comprises a first and a second gearings (21, 23), said first gearing (23) comprising a first wheel (23') rotatably free carried by said second portion (9'') of said second support shaft (9) and a second wheel (23'') fixedly carried by said output shaft (3), wherein said second gearing (21) comprises a first gear (21') fixedly carried by an auxiliary shaft (24) that is rotatably free carried over said output shaft (3) and a second gear (21'') fixedly carried by said second portion (9") of said second support shaft (9), wherein said auxiliary shaft (24) being selectively fixed to the output shaft (3) via selection means (15).

8. Architecture according to claim 7, wherein range stage (C) comprises a gearing (22) comprising a first wheel (22') rotatably carried by said second portion (9'') of said second support shaft (9) and selectively connected to said first wheel (23') of said first gearing (23) via selection means (15) and a second wheel (22'') fixedly carried by said auxiliary shaft (24).

9. Architecture according to any of claims 7 or 8, further comprising selection means (15) for selectively coupling said second portion (6'') of said first support shaft (6) to said output shaft (3).

10. Architecture according to any of the preceding claims, wherein said selection means (15) comprises a synchronizer or a dog clutch.

11. Architecture according to any of the preceding claims further comprising a control unit configured to control actuators configured to regulate the operation of said clutch means (7', 7'', 19', 19'', 19‴) and said selection means (15).

## Patentansprüche

1. Architektur für ein Doppelkupplungsgetriebe (1) für ein Arbeitsfahrzeug, wobei das Doppelkupplungsgetriebe (1) umfasst:
• eine Eingangswelle (2), die konfiguriert ist, um an eine Energiequelle (E) des Arbeitsfahrzeugs gekoppelt zu werden,
• eine Ausgangswelle (3), die konfiguriert ist, um mit einer Antriebsachse des Arbeitsfahrzeugs verbunden zu werden,
• eine Eingangsstufe (A), eine Übersetzungsverhältnisstufe (B) und eine Bereichsübersetzungsverhältnisstufe (C), die in Bezug auf die Eingangswelle (2) und die Ausgangswelle (3) funktionell miteinander verbunden sind,
wobei Eingangsstufe (A) eine erste Stützwelle (6), die einen ersten Abschnitt (6') und einen zweiten Abschnitt (6") umfasst, die koaxial und drehbar unabhängig voneinander sind, und eine zweite Stützwelle (9) umfasst, die einen ersten Abschnitt (9') und einen zweiten Abschnitt (9") umfasst, die koaxial und drehbar unabhängig voneinander sind,
wobei eine erste und eine zweite Verzahnung (4, 5) funktionell zwischen der Eingangswelle (2) und dem ersten Abschnitt (6') angeordnet sind, wobei eine erste und eine zweite Kupplung (7', 7") konfiguriert sind, um zwischen der ersten und zweiten Verzahnung (4, 5) zwischen der Eingangswelle (2) und dem ersten Abschnitt (6') eine auszuwählen,
wobei die Übersetzungsverhältnisstufe (B) eine Vielzahl von Verzahnungen (11, 12, 13, 14) umfasst, die funktionell zwischen dem zweiten Abschnitt (6") und der Eingangswelle (2) angeordnet und funktionell mit der Ausgangswelle (3) verbunden sind, um verschiedene Übersetzungsverhältnisse zwischen der Eingangswelle (2) und der Ausgangswelle (3) zu definieren,
wobei die Verzahnungen (11, 12, 13, 14), eine Vielzahl von Zahnrädern (11', 12', 13', 14'), die von der ersten Stützwelle (6) getragen werden, und entsprechende Vorgelegeräder (11", 12", 13", 14") umfassen, die konfiguriert sind, um mit den Zahnrädern (11', 12', 13', 14') in Eingriff zu kommen, um verschiedene Verhältnisse zu definieren, wobei die Zahnräder (11', 12', 13', 14') teilweise fest von dem zweiten Abschnitt (6) der ersten Stützwelle (6) getragen werden und teilweise drehbar von dem zweiten Abschnitt (6) getragen werden und über Auswahlmittel (15) selektiv an diesem befestigbar ist,
wobei der erste Abschnitt (9') der Anordnung der zweiten Stützwelle (9) über ein Sprunggetriebe (20) funktionell mit dem ersten Abschnitt (6') der ersten Stützwelle (6) verbunden ist, wobei das Sprunggetriebe (20) ein erstes Rad (20') umfasst, das drehbar frei von dem ersten Abschnitt (6') getragen wird und über dritte Kupplungsmittel (19") selektiv mit diesem verbindbar ist,
wobei ein Zahnrad (13') unter den Zahnrädern (11", 12", 13", 14") über vierte Kupplungsmittel (19') selektiv mit dem ersten Abschnitt (6') verbindbar ist,
wobei die Übersetzungsverhältnisstufe (B) ferner eine zusätzliche Verzahnung (8), die funktionell zwischen der Eingangswelle (2) und dem ersten Abschnitt (6') angeordnet ist, und fünfte Kupplungsmittel (19‴) umfasst, die konfiguriert sind, um eine solche zusätzliche Verzahnung (8) zu wählen; wobei
• das Zahnrad (11') der ersten Verzahnung (11) von dem zweiten Abschnitt (6") der ersten Stützwelle (6) drehbar frei getragen wird und über Auswahlmittel (15) selektiv mit dieser verbindbar ist;
• das Zahnrad (13') der dritten Verzahnung (13) von mindestens einem zwischen dem ersten und zweiten Abschnitt (6', 6") der ersten Stützwelle (6) drehbar frei getragen wird und über Auswahlmittel (15) selektiv mit dem zweiten Abschnitt (6") verbindbar ist;
wobei das Sprunggetriebe (20) ein zweites Rad (20") umfasst, das fest von dem ersten Abschnitt (9') der zweiten Stützwelle (9) getragen wird;
wobei die Architektur **dadurch gekennzeichnet ist, dass** die Vorgelegeräder (11", 12", 13", 14") drehbar von der zweiten Stützwelle (9) getragen werden, wobei
• die Zahnräder (12', 14') der zweiten und vierten Verzahnung (12, 14) fest von dem zweiten Abschnitt (6") der ersten Stützwelle (6) getragen werden;
• die Vorgelegeräder (11", 13") der ersten und zweiten Verzahnung (11, 13) drehbar frei über den ersten Abschnitt (9') der zweiten Stützwelle (9) getragen werden und gemeinsam von einer gemeinsamen Stützwelle (16) getragen werden, die drehbar über den ersten Abschnitt (9') getragen wird;
• das Vorgelegerad (12") der zweiten Verzahnung (12) drehbar frei von dem ersten Abschnitt (9') der zweiten Stützwelle (9) getragen wird und über Auswahlmittel (15) selektiv an dieser befestigt wird;
• das Vorgelegerad (14") der vierten Verzahnung (14) fest von dem zweiten Abschnitt (9") der zweiten Stützwelle (9) getragen wird, wobei der zweite Abschnitt (9") über Auswahlmittel (15) selektiv an dem ersten Abschnitt (9') der zweiten Stützwelle (9) befestigt ist.

2. Architektur nach Anspruch 1, wobei die dritten, vierten und fünften Kupplungsmittel (19', 19", 19‴) koaxial zu der Eingangswelle (2) sind.

3. Architektur nach Anspruch 1 oder 2, wobei die dritten, vierten und fünften Kupplungsmittel (19', 19", 19"') koaxial zu der ersten Stützwelle (6) sind.

4. Architektur nach einem der Ansprüche 1 bis 3, wobei das Sprunggetriebe (20) axial zwischen den dritten, vierten und fünften Kupplungsmitteln (19', 19", 19‴) angeordnet ist.

5. Architektur nach einem der vorstehenden Ansprüche, wobei jede der ersten und zweiten Verzahnungen (4, 5) der Eingangsstufe (A) mindestens ein erstes Rad (4', 5'), das drehbar von der Eingangswelle (2) getragen und über ein jeweiliges Kupplungsmittel (7', 7") selektiv an dieser befestigt wird, und ein zweites Rad (4", 5") umfasst, das mit dem ersten Rad (4', 5') in Eingriff kommt, um verschiedene Übersetzungsverhältnisse zu definieren, wobei die zweiten Räder (4", 5") fest von dem ersten Abschnitt (6') der ersten Stützwellenanordnung (6) getragen werden.

6. Architektur nach einem der vorstehenden Ansprüche, wobei die zusätzliche Verzahnung (8) mindestens ein erstes Rad (8'), das drehbar von dem ersten Abschnitt (6') der ersten Stützwellenanordnung (6) getragen wird und über ein fünftes Kupplungsmittel (19‴) selektiv an dieser befestigt ist, und ein zweites Rad (8") umfasst, das fest von dem ersten Abschnitt (9') der zweiten Stützwellenanordnung (9) getragen wird.

7. Architektur nach einem der Ansprüche 5 oder 6, wobei die Bereichsgetriebestufe (C) eine erste und eine zweite Verzahnung (21, 23) umfasst, wobei die erste Verzahnung (23) ein erstes Rad (23'), das drehbar frei von dem zweiten Abschnitt (9") der zweiten Stützwelle (9) getragen wird, und ein zweites Rad (23") umfasst, das fest von der Ausgangswelle (3) getragen wird, wobei die zweite Verzahnung (21) ein erstes Zahnrad (21'), das fest von einer Hilfswelle (24) getragen wird, die drehbar frei über der Ausgangswelle (3) getragen wird, und ein zweites Zahnrad (21") umfasst, das fest von dem zweiten Abschnitt (9") der zweiten Stützwelle (9) getragen wird, wobei die Hilfswelle (24) selektiv an der Ausgangswelle (3) über Auswahlmittel (15) befestigt ist.

8. Architektur nach Anspruch 7, wobei die Bereichsstufe (C) eine Verzahnung (22) umfasst, die ein erstes Rad (22'), das drehbar von dem zweiten Abschnitt (9") der zweiten Stützwelle (9) getragen wird und über Auswahlmittel (15) selektiv mit dem ersten Rad (23') der ersten Verzahnung (23) verbunden ist, und ein zweites Rad (22") umfasst, das fest von der Hilfswelle (24) getragen wird.

9. Architektur nach einem der Ansprüche 7 oder 8, ferner umfassend Auswahlmittel (15) zum selektiven Koppeln des zweiten Abschnitts (6") der ersten Stützwelle (6) mit der Ausgangswelle (3).

10. Architektur nach einem der vorstehenden Ansprüche, wobei das Auswahlmittel (15) einen Synchronisierer oder eine Klauenkupplung umfasst.

11. Architektur nach einem der vorstehenden Ansprüche, ferner umfassend eine Steuereinheit, die konfiguriert ist, um Aktuatoren zu steuern, die konfiguriert sind, um den Betrieb der Kupplungsmittel (7', 7", 19', 19", 19‴) und der Auswahlmittel (15) zu regeln.

## Revendications

1. Architecture pour une transmission à double embrayage (1) pour un véhicule de travail, ladite transmission à double embrayage (1) comprenant :
• un arbre d'entrée (2) configuré pour être accouplé à une source d'alimentation (E) dudit véhicule de travail,
• un arbre de sortie (3) conçu pour être relié à un essieu moteur dudit véhicule de travail,
• un étage d'entrée (A), un étage de rapport de vitesse (B) et un étage de rapport de vitesse de gamme (C) reliés fonctionnellement l'un à l'autre par rapport audit arbre d'entrée (2) et audit arbre de sortie (3),
dans laquelle ledit étage d'entrée (A) comprend un premier arbre de soutien (6) comprenant une première partie (6') et une seconde partie (6") coaxialement et rotativement indépendantes l'une par rapport à l'autre et un second arbre de soutien (9) comprenant une première partie (9') et une seconde partie (9") coaxialement et rotativement indépendantes l'une par rapport à l'autre,
un premier et un second engrenages (4, 5) interposés fonctionnellement entre l'arbre d'entrée (2) et ladite première partie (6'), un premier et un second embrayages (7', 7") conçus pour sélectionner l'un parmi lesdits premier et second engrenages (4, 5) entre ledit arbre d'entrée (2) et ladite première partie (6'),
ledit étage de rapport de transmission (B) comprend une pluralité d'engrenages (11, 12, 13, 14) interposés de manière fonctionnelle entre ladite seconde partie (6") et l'arbre d'entrée (2) et reliés de manière fonctionnelle audit arbre de sortie (3) pour définir différents rapports de transmission entre ledit arbre d'entrée (2) et ledit arbre de sortie (3),
lesdits engrenages (11, 12, 13, 14) comprenant une pluralité d'engrenages (11', 12', 13', 14') portés par un premier arbre de soutien (6) et des contre-engrenages (11", 12", 13", 14") respectifs conçus pour s'engrener avec lesdits engrenages (11', 12', 13', 14') afin de définir des rapports différents, lesdits engrenages (11', 12', 13', 14') étant en partie portés fixement par ladite seconde partie (6) dudit premier arbre de soutien (6) et portaient en partie en rotation ladite seconde partie (6) et pouvant être sélectivement fixée à ce dernier par l'intermédiaire de moyens de sélection (15),
ladite première partie (9') dudit second ensemble arbre de soutien (9) étant reliée fonctionnellement par l'intermédiaire d'un engrenage de saut (20) à ladite première partie (6') dudit premier arbre de soutien (6), ledit engrenage de saut (20) comprenant une première roue (20') librement portée en rotation par ladite première partie (6') et pouvant être sélectivement reliée à cette dernière par l'intermédiaire de troisièmes moyens d'embrayage (19"),
un engrenage (13') parmi lesdits engrenages (11", 12", 13", 14") pouvant être sélectivement reliés à ladite première partie (6') par l'intermédiaire de quatrièmes moyens d'embrayage (19'),
ledit étage de rapport de transmission (B) comprenant en outre un engrenage supplémentaire (8) interposé de manière fonctionnelle entre l'arbre d'entrée (2) et ladite première partie (6') et ledit cinquième moyen d'embrayage (19"') conçu pour sélectionner un tel engrenage supplémentaire (8) ; dans laquelle
• l'engrenage (11') du premier engrenage (11) est porté librement en rotation par la seconde partie (6") dudit premier arbre de soutien (6) et peut être relié sélectivement à ce dernier par l'intermédiaire de moyens de sélection (15) ;
• l'engrenage (13') du troisième engrenage (13) est porté librement par au moins l'une parmi les première et seconde parties (6', 6") dudit premier arbre de soutien (6) et peut être relié sélectivement à la seconde partie (6") par l'intermédiaire de moyens de sélection (15) ;
dans laquelle ledit engrenage de saut (20) comprend une seconde roue (20") supportée fixement par ladite première partie (9') dudit second arbre de soutien (9) ;
ladite architecture est **caractérisée en ce que** lesdits contre-engrenages (11", 12", 13", 14") sont portés en rotation par ledit second arbre de soutien (9), dans laquelle
• les engrenages (12', 14') des deuxième et quatrième engrenages (12, 14) sont portés de manière fixe par la seconde partie (6") dudit premier arbre de soutien (6) ;
• les contre-engrenages (11", 13") des premier et second engrenages (11, 13) sont librement portés en rotation sur ladite première partie (9') dudit second arbre de soutien (9) et généralement portés par un arbre de soutien commun (16) qui est porté en rotation sur ladite première partie (9') ;
• le contre-engrenage (12") du second engrenage (12) est porté librement en rotation par ladite première partie (9') dudit second arbre de soutien (9) et fixée sélectivement à ce dernier par l'intermédiaire de moyens de sélection (15) ;
• le contre-engrenage (14") du quatrième engrenage (14) est porté de manière fixe par ladite seconde partie (9") dudit second arbre de soutien (9), ladite seconde partie (9") étant sélectivement fixée à ladite première partie (9') dudit second arbre de soutien (9) par l'intermédiaire de moyens de sélection (15).

2. Architecture selon la revendication 1, dans laquelle lesdits troisième, quatrième et cinquième moyens d'embrayage (19', 19", 19‴) sont coaxiaux audit arbre d'entrée (2).

3. Architecture selon la revendication 1 ou 2, dans laquelle lesdits troisième, quatrième et cinquième moyens d'embrayage (19', 19", 19‴) sont coaxiaux audit premier arbre de soutien (6).

4. Architecture selon l'une quelconque des revendications 1 à 3, dans laquelle ledit engrenage de saut (20) est interposé axialement entre lesdits troisième, quatrième et cinquième moyens d'embrayage (19', 19", 19"').

5. Architecture selon l'une quelconque des revendications précédentes, dans laquelle lesdits premier et second engrenages (4, 5) dudit étage d'entrée (A) comprennent chacun au moins une première roue (4', 5') portée en rotation par ledit arbre d'entrée (2) et fixée sélectivement à ce dernier par l'intermédiaire d'un moyen d'embrayage (7', 7") respectif et d'une seconde roue (4", 5") s'engrenant avec la première roue (4', 5') pour définir différents rapports de démultiplication, lesdites secondes roues (4", 5") sont portées de manière fixe par ladite première partie (6') dudit premier ensemble arbre de soutien (6).

6. Architecture selon l'une quelconque des revendications précédentes, dans laquelle ledit engrenage supplémentaire (8) comprend au moins une première roue (8') portée de manière rotative par ladite première partie (6') dudit premier ensemble arbre de soutien (6) et fixée sélectivement à ce dernier par l'intermédiaire d'un dit cinquième moyen d'embrayage (19"') et une seconde roue (8") portée de manière fixe par ladite première partie (9') dudit second ensemble arbre de soutien (9).

7. Architecture selon l'une quelconque des revendications 5 ou 6, dans laquelle ledit étage d'engrenage de gamme (C) comprend un premier et un second engrenages (21, 23), ledit premier engrenage (23) comprenant une première roue (23') portée librement en rotation par ladite seconde partie (9") dudit second arbre de soutien (9) et une seconde roue (23") portée fixement par ledit arbre de sortie (3), dans laquelle ledit second engrenage (21) comprend un premier engrenage (21') porté fixement par un arbre auxiliaire (24) qui est librement rotatif porté par-dessus ledit arbre de sortie (3) et un second engrenage (21") porté fixement par ladite seconde partie (9") dudit second arbre de soutien (9), dans laquelle ledit arbre auxiliaire (24) étant sélectivement fixé à l'arbre de sortie (3) par l'intermédiaire de moyens de sélection (15).

8. Architecture selon la revendication 7, dans laquelle l'étage de gamme (C) comprend un engrenage (22) comprenant une première roue (22') portée en rotation par ladite seconde partie (9") dudit second arbre de soutien (9) et reliée sélectivement à ladite première roue (23') dudit premier engrenage (23) par l'intermédiaire de moyens de sélection (15) et une seconde roue (22") portée fixement par ledit arbre auxiliaire (24).

9. Architecture selon l'une quelconque des revendications 7 ou 8, comprenant en outre des moyens de sélection (15) permettant d'accoupler sélectivement ladite seconde partie (6") dudit premier arbre de soutien (6) audit arbre de sortie (3).

10. Architecture selon l'une quelconque des revendications précédentes, dans laquelle ledit moyen de sélection (15) comprend un synchroniseur ou un embrayage à griffes.

11. Architecture selon l'une quelconque des revendications précédentes, comprenant en outre une unité de commande configurée pour commander des actionneurs configurés pour réguler le fonctionnement desdits moyens d'embrayage (7', 7", 19', 19", 19‴) et desdits moyens de sélection (15).
